# EUROPEAN PATENT SPECIFICATION

(11) **EP 3 078 255 B1**
(45) Date of publication and mention of the grant of the patent: **31.01.2018**
(21) Application number: 16159625.9
(22) Date of filing: 10.03.2016
(51) Int. Cl.: A01D 89/00

(54) **APPARATUS AND METHOD FOR PICKING UP LOOSE CROP MATERIAL AND CONVEYING IT THROUGH A FEEDING CHANNEL**
VORRICHTUNG UND VERFAHREN ZUR AUFNAHME VON LOSEM ERNTEGUT UND ZUR FÖRDERUNG DAVON DURCH EINEN FÜHRUNGSKANAL
APPAREIL ET PROCÉDÉ POUR SAISIR UNE MATIÈRE VÉGÉTALE EN VRAC ET LA TRANSPORTER À TRAVERS UN CANAL D'ALIMENTATION

(30) Priority: 16.03.2015 NL 2014462
(43) Date of publication of application: 12.10.2016
(73) Proprietor: Forage Innovations B.V., 3147 PB Maassluis (NL)
(72) Inventor: REIJERSEN VAN BUUREN, Willem Jacobus, 3147PB MAASSLUIS (NL)
(74) Representative: AGCO Intellectual Property Department

(56) References cited:
- EP-A1- 1 417 879
- EP-A1- 2 674 022
- US-A- 5 819 517
- US-A1- 2007 119 140
- US-A1- 2008 141 642

## Description

### FIELD OF THE INVENTION

The invention refers to a crop feeding apparatus and to a crop feeding method for use in an agricultural harvester.

### BACKGROUND OF THE INVENTION

An agricultural harvester picks up loose crop material from the ground by means of a driven pick-up unit or otherwise collects crop material. The harvester conveys the picked-up or otherwise collected crop material through a feeding channel towards a buffering or processing room. In this room the crop material is buffered (loader wagon) or pressed into bales (round or cuboid balers) or threshed (combine harvester or field chopper) or processed in a further way.

The invention is used on board of an agricultural harvester with a pick-up unit. The amount of crop material to be picked up from the ground can significantly vary during operation. The problem can occur that a high amount of picked-up crop material causes a jam in a place above the pick-up unit or a jam in the feeding channel. This jam can cause an overload situation. Several suggestions how to overcome this problem have been made.

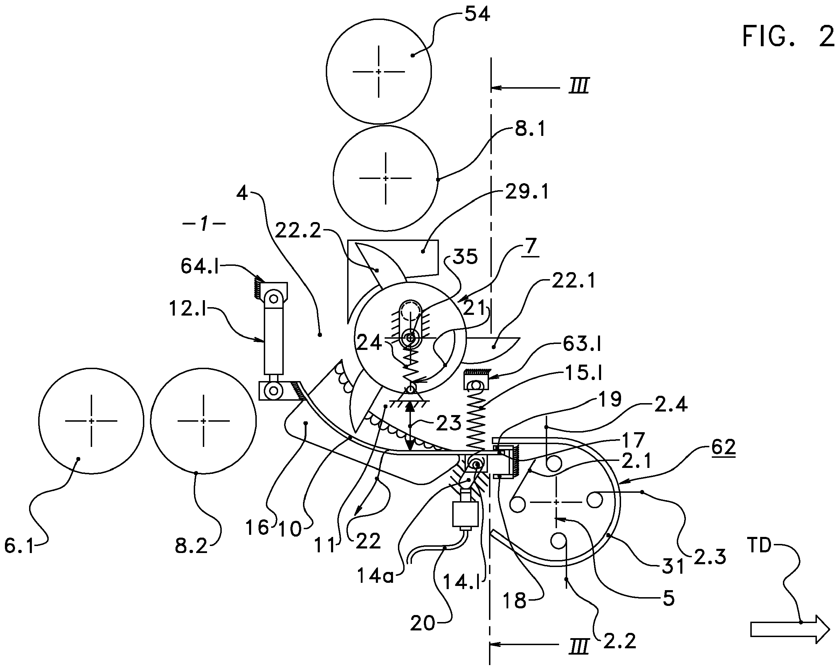

EP 2674022 A1 discloses a pick-up device for an agricultural harvester. A pick-up unit with a rotated pick-up drum (Aufsammeltrommel 5) picks up loose crop material from the ground. The picked-up crop material is guided by and around the driven pick-up drum 5 and below a pivotal downholder unit (Niederhalter 10). Two lateral pivotal arms comprise arm parts 11, 19 and carry two consecutive downholder rollers 12, 13, cf. Fig. 2. Two actuators (Stellglieder 25) can pivot the arm parts 11, 19 with the rollers 12, 13 with respect to the harvester's frame upwards and away from the ground. Two further actuators (Stellglieder 26) can pivot the arm parts 19 and the downholder roller 13 upwards with respect to the arm parts 11 and the downholder roller 12. Pivoting upwards both arm parts 11, 19 or only the front arm parts 19 enlarges the conveying path positioned above the pick-up drum 5. A hydraulic motor 17 rotates the pick-up drum 5. A further hydraulic motor 18 rotates the rear downholder roller 13. A sensor measures the load onto at least one hydraulic motor 17, 18, e.g. by measuring the hydraulic pressure which is required for rotating the drum 5 or the downholder roller 13. A load increase causes an upward pivoting of the arm parts 11, 13. A high load is a value indicative of a large amount of crop material at the pick-up device.

US 5,819,517 discloses a harvester with a pick-up drum 5 and a subsequent feeding channel 6 with a channel bottom 10. The feeding channel 6 guides into a drum-shaped pressing chamber 1 which is delimited - amongst other parts - by two lower pressing rollers 3 and two upper pressing rollers 2. A feeding rotor 7 with rigid tines 8 engage from above into the feeding channel 6 and conveys picked-up crop material through the feeding channel towards the pressing chamber 1. The crop material is compressed. For avoiding a jam in the feeding channel 6, the feeding channel 6 can move upwards and downwards (arrow 23). Two tension springs 15 are connected with the channel bottom 10 in two pegs 14 and tend to move the bottom 10 upwards against the expanding force of the crop material. Two hydraulic piston-cylinder devices 12 are connected with the bottom 10 near its rear edge and can actively pivot the bottom 10 around an axis running through the pegs 14. Two stop elements 18, 19 limit the vertical movement of the front edge of the channel 10. A sensor 20 measures the event that the channel bottom 10 is forced downwards such that it touches the lower stop 18. The detection of this event causes the step that the drive for the pick-up drum 5 is switched off. Thereby the conveyor 7 is protected from overload.

The harvester described in EP 1252813 B2 picks up crop material from the ground by means of a pick-up drum (Aufnahmetrommel 9) with pick-up tines (Förderzinken 11). A downholder unit (Niederhalter 10) above the pick-up drum 9 comprises a roller (Walze 13) mounted between two carrying arms (Tragarme 14, 15). The flow of crop material is guided around the pick-up drum 9 and below the downholder 10 and below a subsequent guiding sheet (Leitorgan 18). The guiding sheet 18 can pivot around a horizontal pivoting axis 19 which is positioned perpendicular to the conveying direction and positioned at the front edge of the guiding sheet 18. In one implementation several guiding tines (Zinken 31) extends backwards. The flow of crop material can lift the guiding sheet 18 against the force of gravity.

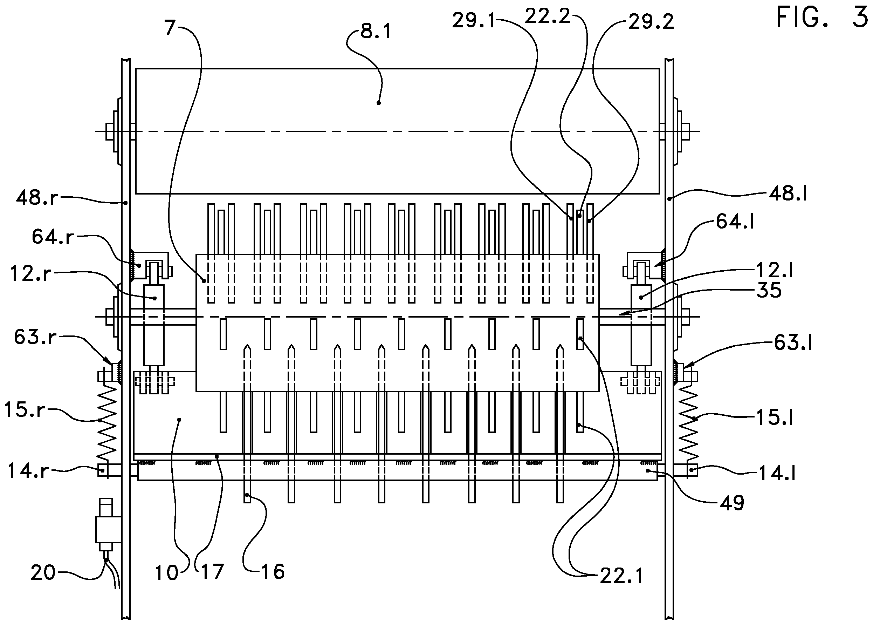

The harvester 10 of EP 1417879 A1 picks-up crop material from the ground by means of a pick-up unit (Gutaufnehmer 30). A pick-up rotor (Aufnehmerrotor 36) with tines (Zinken 38) picks up the crop material. The pick-up crop material is guided along a path which is laterally be limited by guiding sheets (Leitbleche 34) and limited from above by a downholder rotor (Niederhalterrotor 32), cf. Fig. 2. The downholder rotor 32 can be set into rotation by the picked-up crop material or by an own drive. Two auger conveyors (Schnecken 46) are mounted at lateral areas of the downholder rotor, cf. Fig. 3.

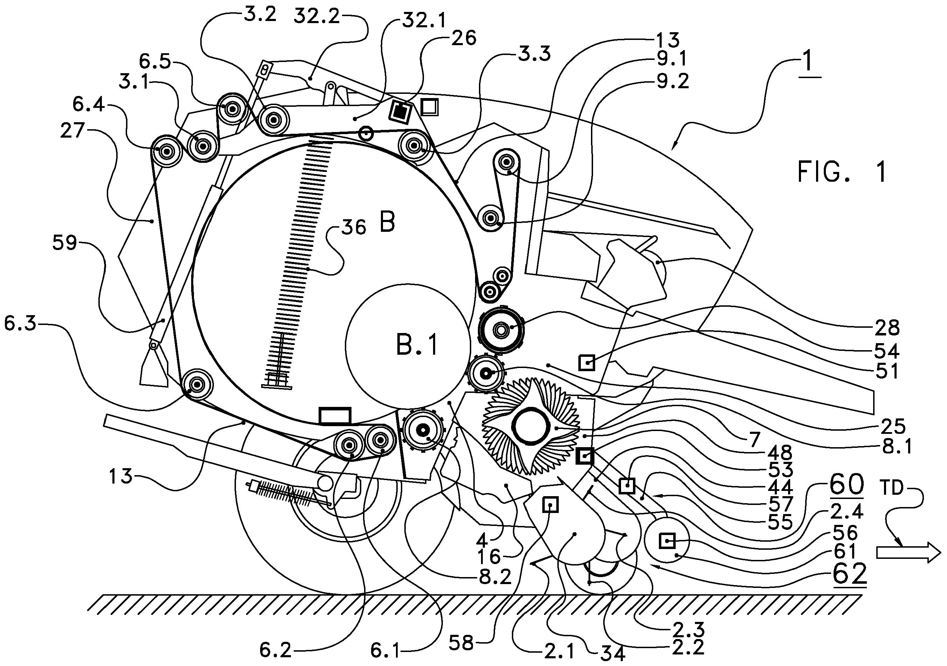

The round baler 10 of US 20080141642 A1 picks up crop material from the ground by means of a pick-up 20 with rotary tines. This pick-up or material receiver 20 lifts up the material and conveys it overhead to an inlet 26. A material hold-down device 24 is located above the material receiver 20 and upstream of a feed rotor 22, cf. Fig. 1. The material hold-down device 24 comprises a support 28, a material-guiding device 30, a travel limiter 32, and a press-down device 34, cf. Fig. 2. The material-guiding device 30 can move vertically relative to the material receiver 20 in order to adapt to the thickness of the swath. In addition it can be moved through a second range of movement beyond a normal first range of movement to allow a material jam to be clear. In the embodiment of Fig. 7 to Fig. 9 the travel limiter 32 can be adjusted by remote control and can deflect countered the force of a spring-loaded accumulator 58. The travel limiter 32 experiences no resistance in the direction of the material receiver 20. Extension in the direction of the material-guiding device builds up a motional resistance by means of a non-return valve 60.

### SUMMARY OF THE INVENTION

A problem solved by the invention is to provide a crop feeding apparatus with the features of the preamble of claim 1 and a crop feeding method with the features of the preamble of claim 17 wherein an overload due to a high amount of crop material in the harvester is avoided without the need of actively moving the downholder unit and wherein no load sensor is required.

This problem is solved by a crop feeding apparatus with the features of claim 1 and by a crop feeding method with the features of claim 17. Preferred embodiments are specified in the depending claims.

The crop feeding apparatus according to the invention is arranged for being used in an agricultural harvester. The crop feeding apparatus comprises
- a pick-up unit,
- a moveably mounted downholder unit,
- a crop guiding member,
- a conveyor,
- a feeding channel actuator, and
- at least one position sensor.

The downholder unit is positioned vertically or angularly above the pick-up unit. A pick-up channel is formed between the pick-up unit and the downholder unit.

The crop guiding member is positioned downstream from the pick-up unit and downstream from the downholder unit wherein the term "downstream" refers to the direction in which the picked-up crop material is conveyed through the pick-up channel. A feeding channel is formed between the crop guiding member and the conveyor. At least one part of the crop guiding member is moveable mounted with respect to the conveyor such that the distance between this part and the conveyor can be changed and such the cross-section area of the feeding channel can be changed.

The crop feeding apparatus operates as follows and the crop feeding method comprises the following steps:
- The pick-up unit picks up loose crop material from the ground.
- The picked-up loose crop material is moved towards the feeding channel.
- When being moved towards the feeding channel, the picked-up crop material is moved through the pick-up channel between the pick-up unit and the downholder unit.
- The conveyor conveys the picked-up and moved crop material through the feeding channel in a direction away from the pick-up channel between the pick-up unit and the downholder unit.
- The position sensor measures at least one value indicative of the relative position of the moveable downholder unit with respect to the pick-up unit or indicative of the change over time of this relative position.
- The feeding channel actuator applies a force onto the or at least one moveable part of the crop guiding member. By applying this force the actuator tends to move this moveable part towards the conveyor. This movement decreases the cross-section area of the feeding channel and compresses crop material which is conveyed through the feeding channel.
- By evaluating signals from the position sensor it is automatically monitored whether the or at least one measured position value of the downholder unit is above a given position threshold and/or whether the or at least one measured position change value is above a given position change threshold. Exceeding this threshold triggers the step that the feeding channel actuator decreases the force which the actuator applies onto the or at least one moveable part. Thereby the force for compressing the crop material is decreased. An enlargement of the cross-section area is enabled.
- With other words: The feeding channel actuator moves the or at least one moveable part depending on signals from the position sensor, i.e. depending on at least one measured position value or measured position change value.

### ADVANTAGES

The downholder unit above the pick-up unit presses the picked-up crop material downwards and contributes to guide the crop material through the pick-up channel. The downholder unit further reduces the risk that picked-up crop material is not at all or not properly guided into the feeding channel. It reduces the risk that a high amount of crop material reaches and pollutes further parts of the harvester or drops again on the ground.

The crop feeding apparatus according to the invention reduces the risk of a jam in the feeding channel which is positioned downstream from the formed pick-up channel. This feeding channel is delimited by the crop guiding member and by the conveyor and is positioned between them. The conveyor engages into this feeding channel, preferably from above or from below. By the engaging conveyor the crop material is conveyed through this feeding channel.

According to the invention the feeding channel actuator tends to move a part of the crop guiding member towards the conveyor. Thereby the cross-section area of the feeding channel is decreased and the crop material in the feeding channel is compressed. An equilibrium state between the force applied by the actuator and the counter-force of the compressed crop material occurs. Therefore the crop material is compressed quite uniformly even if the amount of crop material on the ground varies overtime. The available space on board of the harvester is better used.

A jam in the feeding channel may threaten or occur due to a high amount of loose crop material in the feeding channel, in particular due to highly pressed material. This jam can cause overload for a conveyor drive or power train. For reducing the jam or overload risk the feeding channel actuator reduces the force applied onto the or one moveable part. The compressed crop material tends to move the or at least one moveable part away from the conveyor against the reduced force applied by the feeding channel actuator. This movement away from the conveyor increases the cross sectional area of the feeding channel. Thank to this increase more space for crop material in the feeding channel is available. The risk of a jam is reduced. If a jam has already occurred, the conveyor needs less torque for removing it.

The crop feeding apparatus according to the invention does not need an actuator which actively pivots or otherwise moves the downholder unit upwards against the force of gravity or downwards to compress the crop material in the pick-up channel. It is also possible and it suffices that the downholder unit is a passive moveable part and that the loose crop material lifts the downholder unit upwards against the force of gravity while the crop material is conveyed through the pick-up channel which is positioned above the pick-up unit and that the force of gravity presses the downholder unit downwards against the conveyed loose crop material. A high amount of crop material tends to automatically enlarge the cross-section area of the pick-up channel against the downholder unit's weight.

The invention makes it possible that the down holder unit is implemented as a purely passive part. The weight of the down holder unit is known by construction. The crop material in the pick-up channel tends to lift the down holder unit against the force of gravity upwards. A momentary equilibrium state occurs. The measured relative position or position change depends on the current amount of crop material in the pick-up channel and is a value indicative of this amount.

Thanks to the invention no load sensor is required, in particular no torque or pressure or further load sensor for the pick-up unit or for the feeding channel actuator. Such a load sensor can only operate after the harvester has started its operation and has picked up crop material. In addition the load sensor may in some circumstance be difficult to implement or does not operate reliably. In addition the invention can be used with every drive for the pick-up unit whereas a load sensor for the pick-up unit may depend on the drive concept for the pick-up unit. A load sensor for an electrically driven pick-up unit operates in another way than a load sensor for a hydraulically driven pick-up unit or a pick-up unit driven by at least one chain or a shaft. A load sensor for the feeding channel actuator can also depend on the implementation of this actuator.

According to the invention the relative position or position change of the downholder unit is measured but not necessary the load applied onto the pick-up unit. This relative position does not depend on the drive concept for the pick-up unit or for the conveyor or a further driven part of the crop feeding apparatus. The required position sensor can more easily be implemented and operates with a higher reliability. The position sensor can deliver signals even before the harvester has started its operation.

Typically a harvester is moved over an agricultural field during operation. Thanks to the invention no look-ahead sensor is necessary which detects the amount of crop material which is positioned on the ground in front of the harvester and which will be picked up and conveyed through the pick-up channel and subsequently the feeding channel. In particular no camera and no image processing unit are necessary for controlling the feeding channel actuator.

According to the invention the relative position or position change of the downholder unit is automatically measured during operation. A position of the downholder unit far away from the pick-up unit or a quick position change is a clue for a large amount of loose crop material in the pick-up channel between the pick-up unit and the downholder unit, e.g. caused by a clump of loose crop material in the pick-up channel, and before this large amount has reached the feeding channel.

According to the invention this clue is automatically detected. The feeding channel is positioned downstream of the pick-up channel. Therefore a high amount of crop material first passes the pick-up channel and afterwards reaches the feeding channel. As the feeding channel actuator operates depending on the measured position or position change, the feeding channel actuator can reduce the applied force, thereby enabling the compressed crop material to enlarge the feeding channel, early enough and in advance, e.g. before this clump reaches the feeding channel. This early movement further reduces the risk of a jam in the feeding channel. A sensor which measures a value indicative of the crop material amount in the feeding channel itself may indicate a high amount too late, e.g. after the crop material clamp as reached the feeding channel.

Thanks to the invention a feeding channel actuator operating in one direction (applying a force tending to move the part towards the conveyor) suffices. It is possible but not necessary to use a double-acting actuator which can actively move the or one part in both directions.

Thanks to the invention the reduction of a jam risk can be achieved without moving the conveyor away from the crop guiding member. Such a moveable conveyor can often hardly be implemented. It suffices that the conveyor can rotate or otherwise move around a stationary axis.

### PREFERED EMBODIMENTS

In one implementation the conveyor is positioned above the crop guiding member, i.e. the feeding channel is positioned below the conveyor and the conveyor operates as an undershot conveyor. In a further implementation the conveyor is positioned below the crop guiding member, i.e. the feeding channel is positioned above the conveyor and the conveyor operates as an overhead conveyor. In both implementations the feeding channel is positioned between the conveyor and the crop guiding member. A part of the feeding channel is positioned between the or one moveable part and the conveyor.

The conveyor can comprise at least one rotor with rigid tines and/or a conveying belt or stuffing tines.

In one implementation the feeding channel actuator only operates in one direction, i.e. tends to move the or at least one moveable part towards the conveyor and tends to decrease the cross-section area of the feeding channel. The compressed crop material in the feeding channel tends to move this moveable part away from the conveyor against the force applied by the feeding channel actuator. If the feeding channel actuator operates with a reduced force, the compressed crop material succeeds in moving the moveable part away from the conveyor. This movement increases the cross-section area of the feeding channel such that the compression decreases. Such a single-acting actuator can be implemented easier than a double-acting actuator.

In a further implementation the feeding channel actuator operates in both directions (double-acting actuator). It tends to move the moveable part towards the conveyor. If the or at least one position value or a position change value is above the threshold, the feeding channel actuator actively moves the moveable part away from the conveyor, thereby actively increasing the cross-section area of the feeding channel. Preferably the feeding channel actuator later actively decreases again the cross-section area, thereby reducing the cross-section area again and compression again the crop material to a higher degree.

The feeding channel actuator can comprise a biasing member, e.g. at least one spring, which tends to move the moveable part with a constant force towards the conveyor, and a further actuator which applies a variable force. This variable force can be varied during operation, preferably in a controlled manner, e.g. by control inputs generated by a control unit.

Different embodiments are possible what value indicative of the relative position of the downholder unit with respect to the pick-up unit or the position change is measured. In one embodiment the downholder unit is pivotally mounted, e.g. at a frame of the harvester or at a frame of the crop feeding device or at a frame of the pick-up unit. Thereby the downholder unit can automatically adapt to the amount of crop material which is conveyed through the pick-up channel. In one implementation the or at least one sensor measures the current pivoting angle of the downholder unit with respect to this frame. This sensor can comprise a potentiometer.

Preferably the pick-up unit is also pivotally mounted and can thereby adapt to the contour of the ground over which the harvester is moved. In one implementation the or at least one further sensor measures the pivoting angle of the pick-up unit or the pivoting angle change additionally to the pivoting angle or angle change of the downholder unit. The difference between the two pivoting angles or angle changes serves as a value indicative of the relative position.

In the embodiment with the sensor which measures the pivoting angle of the pivotal downholder unit the feeding channel actuator reduces the force applied onto the or at least one moveable part of the crop guiding member, thereby enabling an enlargement of the feeding channel cross-section area, depending on the measured pivoting angle or angle change of the downholder unit. Preferably the feeding channel actuator reduces the applied force not only depending on the pivoting angle or pivoting angle change of the downholder unit but additionally depending on the measured pivoting angle or angle change of the pick-up unit. In one implementation the difference between the downholder unit pivoting angle and the pick-up unit pivoting angle is calculated and the feeding channel actuator reduces the applied force depending on this difference.

In one embodiment a position sensor measures the distance between the downholder unit and the pick-up unit. This distance is a value indicative of the cross-section area of the pick-up channel. A large distance is a clue for a large amount of crop material moved through the pick-up channel causing a large cross-section area of the pick-up channel.

In one embodiment the crop guiding member comprises a preferably moveable guiding surface and preferably a crop processing part, e.g. a cutting assembly or guiding sheets engaging into the feeding channel, which is moveably connected with the guiding surface or with a frame of the harvester. The guiding surface forms one border of the feeding channel. The feeding channel is formed between the conveyor and the guiding surface. Preferably the cutting assembly comprises knives which engage through slots in the guiding surface into the feeding channel and cuts conveyed loose crop material. Preferably the feeding channel is formed above the guiding surface and the knives can engage from below into the feeding channel. The feeding channel actuator tends to move the guiding surface and in one embodiment additionally the crop processing part towards the conveyor.

In both implementations of this embodiment the crop processing part can be moved with respect to the guiding surface. Moving the crop processing part away from the conveyor increases the available cross-section area of the feeding channel limited by the guiding surface even if the guiding surface is not moved as the crop processing part engages with a smaller amount or not at all into the feeding channel. It is possible but not necessary to lower the guiding surface itself for increasing the available cross-section area. In a further embodiment the guiding surface itself can be moved towards the and away from the conveyor.

In one implementation the crop processing part is mechanically connected with the guiding surface. The feeding channel actuator tends to move the guiding surface together with the connected crop processing part towards the conveyor by applying a force onto the guiding surface. The feeding channel actuator decreases the force applied onto the guiding surface if the measured value is above the given threshold. It is possible that the guiding surface together with the crop processing part can be moved with respect to the conveyor and in addition the crop processing part can be moved with respect to the guiding surface.

In one implementation the crop processing part comprises a cutting assembly with a plurality of knives which cut the loose crop material conveyed through the feeding channel. The knives engage through slots in the guiding surface into the feeding channel. The cutting assembly can be positioned below or above the feeding channel. According to this implementation the feeding channel actuator tends to move the cutting assembly with respect to the guiding surface towards the conveyor or tends to move the guiding surface together with the cutting assembly towards the conveyor. The feeding channel actuator reduces the force applied onto the cutting assembly or onto the guiding surface if the measured value is above the given threshold. In one implementation the feeding channel actuator can actively pivot the knives away from the conveyor.

In a further embodiment the guiding surface itself serves as the or one moveable part of the crop guiding member. The feeding channel actuator applies a force onto the guiding surface, thereby tending to reduce the cross-section area of the feeding channel. In yet a further embodiment the moveable part sprays or otherwise applies a fluid onto the crop material in the feeding channel, e.g. a preservative or an inoculant.

Preferably be applied force is reduced by a force reduction value wherein this reduction value is the higher the difference between the measured position value or value change and the given threshold is.

Preferably the feeding channel actuator increases again the force applied onto the or at least one moveable part of the crop guiding member back towards the conveyor as soon as the measured position value or position value change indicates a lower amount of crop material. The cross-section area of the feeding channel is reduced again and the pressure applied onto the crop material is increased again. This backwards movement increases the performance of the crop feeding apparatus.

In one embodiment the crop feeding apparatus is in data connection with a control unit. In one implementation this control unit is mounted on board of the harvester with the crop feeding apparatus. In a further implementation the control unit is mounted on board of a propelled vehicle which pulls or pushes the harvester. The control unit processes signals received from the or every sensor for the downholder unit position. This control unit generates control inputs for the feeding channel actuator depending on sensor signals. This embodiment enables a quick reaction on detecting a high amount of crop material in the pick-up channel between the pick-up unit and the downholder unit. The feeding channel is automatically enlarged without the need of a human input. A display unit for displaying alerts concerning the downholder unit position is not necessary.

In a further embodiment the harvester is arranged for being operated by a human operator. The control unit generates an alert depending on signals from the or at least one position sensor. This alert is displayed or otherwise communicated to the operator, e.g. shown on a display device or via an acoustic signal. The operator can use an input device, e.g. a user terminal or a control stick or switch, for generating control inputs for the feeding channel actuator. After having obtained an input from the operator, the input device generates control inputs for the feeding channel actuator and thereby triggers the feeding channel actuator for reducing the applied force.

The harvester on which the invention is used can be a self-propelled or pulled or pushed agricultural vehicle, e.g. a round baler, a cuboid baler, a field chopper, or a loader wagon.

These and other aspects of the invention and of the preferred embodiment will be even more apparent from the detailed embodiment as described below and will be elucidated in detail there.

### BRIEF DESCRIPTION OF THE DRAWINGS

Fig. 1 shows a cross-sectional view through the baler of the embodiment;
Fig. 2 shows an enlarged view of a lower front part of the baler of Fig. 1;
Fig. 3 shows a view in the plane III-III of Fig. 2;
Fig. 4 shows an exemplary relationship between the force applied by the feeding channel bottom actuator onto the feeding channel bottom as a function of the measured distance between the downholder unit and the pick-up unit.

### DETAILED DESCRIPTION OF EMBODIMENT

In the embodiment the invention is used in a round baler 1 belonging to an agricultural harvester. Fig. 1 shows a cross-section view through this baler 1 in a vertical middle plane. The baler 1 is pulled by a tractor or further pulling vehicle (not shown) in a travelling direction TD (in Fig. 1 from left to right) over ground.

The baler 1 comprises the following parts, cf. Fig. 1:
- a pivotal pick-up unit 62,
- a pivotal downholder unit 60 positioned angularly above the pick-up unit 62,
- a driven conveying rotor 7 with a sequence of rigid conveying stars wherein each conveying star comprises several rigid conveying tines,
- a cutting assembly 16 with several cutting knives,
- a stationary front housing 25,
- a pivotal tailgate 27,
- several parallel pressing belts 13,
- several deflecting rollers 3.1, ..., 6.1, ..., 9.1, ... for the pressing belts 13,
- a tensioning arrangement with an inner tensioning device 32.1 and an outer tensioning device 32.2,
- two driven starter rollers 8.1 and 8.2 which delimit a crop material inlet 4,
- a supply reel 28 with wrapping material (net or plastic sheet) rotatably held by an unrolling station,
- a web feeding roller 54,
- a baler control unit 51, and
- four sensors 53, 56, 57, 58.

The pick-up unit 62 comprises:
- a pick-up frame 34,
- a pick-up drum 5 (shown in Fig. 2) rotatably mounted at the pick-up frame 34,
- a chain drive (not shown) for rotating the pick-up drum 5,
- several spring-mounted pick-up tines 2.1, 2.2, 2.3, ..., and
- a sequence with several stripping elements 31.

The downholder unit 60 comprises
- a downholder roller 61 which operates as an idler roller,
- a holding member 55 for the downholder roller 61, and
- a downholder rake which is positioned between the downholder roller 61 and the conveying rotor 7.

The pick-up unit 62 is pivotally mounted at the front housing 25. Thereby the pick-up unit 62 can move upwards and downwards and can thereby automatically adapt to the contour of the ground over which the baler 1 is moved. In the embodiment the baler 1 does not comprise an actuator for automatically lifting the pick-up unit 62 from the ground. During operation the pick-up unit stays in contact with the ground, e.g. by means of guiding wheels. It is possible that an actuator can lift the pick-up unit 62 when the baler 1 is moved over a public street (transport position of the pick-up unit 62).

The holding member 55 of the downholder unit 60 is also pivotally mounted at the stationary front housing 25. Therefore the downholder unit 60 can pivot with respect to the front housing 25. A stop element limits the possible upward movement of the down holder unit 60, thereby limiting the possible distance of the down holder unit 60 to the pick-up unit 62.

The downholder roller 61 is rotatably mounted between two lateral holding arms of the holding member 55. The distance between the downholder roller 61 and the ground can vary due to the varying amount of picked-up crop material. The downholder rake is rigidly or pivotally mounted at the holding member 55 and comprises several rigid tines which points towards the conveying rotor 7. In the embodiment the baler 1 does not comprise an actuator for actively lifting the downholder unit 60. During operation the down holder unit 60 is only moved by the picked-up crop material and its own weight.

A pick-up channel 44 between the pick-up unit 62 and the downholder unit 60 is formed. As the downholder unit 60 is pivotal, the cross-section area of this pick-up channel 44 can change during operation due to the varying amount of crop material.

In the embodiment the invention is implemented by means of four sensors 53, 56, 57, 58. A pivoting angle sensor 58 measures the current pivoting angle of the pick-up unit 62 with respect to the front housing 25. A pivoting angle sensor 53 measures the current pivoting angle of the holding member 55 and thereby of the downholder unit 60 with respect to the front housing 25. These two pivoting angle sensors can comprise potentiometers.

A distance sensor 57 measures the current distance between the holding member 55 and the circumferential surface of the pick-up drum of the pick-up unit 62, i.e. a value indicative of the cross-section area of the pick-up channel 44. A distance sensor 56 measures the current distance of the downholder roller 61 to the ground in a substantially vertical direction.

The sensors 53, 56, 57, 58 are in permanent data connection with the baler control unit 51. During operation the baler control unit 51 is in data connection with an output device and an input device which both are mounted on board of the pulling tractor. The output device generates messages for a human operator sitting in the driver's cab. The input device processes inputs from the human operator. It is also possible that the baler control unit is in data connection with a mobile computer comprising an output device and an input device, e.g. a smartphone.

The parallel pressing belts 13 are guided around the deflecting rollers 3.1, ..., 6.1, ..., 9.1, .... The deflecting rollers 6.1, ..., 9.1, ... are stationary rollers, i.e. can only rotate around their own rotational axes. The stationary rollers 9.1, 9.2, ... are rotatably mounted at the stationary front housing 25. In the embodiment the roller 9.1 is driven and moves the pressing belts 13. The stationary rollers 6.1, 6.2, ... are rotatably mounted at the pivotal tailgate 27. The pressing belts 13 and the starter rollers 8.1, 8.2 surround a drum-shaped bale forming chamber.

The deflecting rollers 3.1, 3.2, ..., however, are mounted on the tensioning assembly 32.1, 32.2. The entire tensioning assembly 32.1, 32.2 with the rollers 3.1, 3.2, ... can pivot around a pivoting axis which runs through the traversal bearing 26 which is mounted at the front housing 25.

As crop material is injected into the bale forming chamber during operation, the diameter of the drum-shaped bale forming chamber increases. An increasing bale is formed in the bale forming chamber. Fig. 1 simultaneously shows a bale B.1 with an intermediate diameter and a bale B with the required final diameter. The pressing belts 13 tend to pivot the tensioning arrangement 32.1, 32.2 against the retaining force of two lateral springs 36 and of a controlled hydraulic retaining device 59 comprising two piston-cylinder devices. The baler control unit 51 sends control inputs to valves of the retaining device 59.

This embodiment with the controlled retaining device 59 ensures that the pressing belts 13 apply a sufficiently high pressure onto the loose crop material in the bale forming chamber and that this pressure remains below a given threshold.

Fig. 2 shows a cross-sectional view through a lower front part of the baler 1 comprising the pick-up unit 62 and the feeding channel 11. Fig. 3 shows a cross sectional view in the plane III - III of Fig. 2, i.e. in a viewing direction opposite to the travelling direction TD. The travelling direction TD points to the observer. The downholder unit 60 is omitted in Fig. 2 and Fig. 3.

Fig. 2 shows the following parts of the baler 1:
- the rotated pick-up drum 5 with the spring-mounted tines 2.1, 2.2, ... of the pick-up unit 62,
- a pivotal feeding channel bottom 10 serving as the moveable guiding surface,
- a left lateral peg (pin) 14.l for a supporting axle holding the pivotal feeding channel bottom 10 in a front segment, cf. Fig. 3,
- a left piston-cylinder device 12.l of a single-acting or double-acting hydraulic actuator 12 for the feeding channel bottom 10,
- a left retaining spring 15.l of a passive retaining device 15 which lifts the feeding channel bottom 10 towards the conveyor 7,
- a left mounting point 63.l for the left retaining spring 15.l,
- a left mounting point 64.l for the left piston-cylinder device 12.l of the hydraulic actuator 12,
- an upper stop 19 and a lower stop 18 which limit the possible movements of the front edge of the feeding channel bottom 10,
- a sensor 20 which is mounted at the right sidewall 48.r and monitors the lower stop 18,
- the conveying rotor 7,
- the rotating axle 35 for the conveying rotor 7,
- a retaining spring 24 for the conveying rotor 7,
- a stripping element 29.1 which cleans the gap between two adjacent conveying stars of the conveying rotor 7,
- a cutting knife of the cutting assembly 16 which engages from below through the feeding channel bottom 10,
- the two starter rollers 8.1, 8.2 delimiting the crop material inlet 4,
- a stationary deflecting roller 6.1, and
- the web feeding roller 54.

The conveying rotor 7 rotates clockwise in the direction 21 around the axle 35 perpendicular to the drawing plane of Fig. 1 and of Fig. 2. The conveying rotor 7 comprises several conveying stars wherein each conveying star comprises several rigid tines 22.1, 22.2, ... In one implementation the rotating axis 35 of the conveying rotor 7 is stationary mounted. In a further embodiment the conveying rotor 7 can move with respect to the front housing 25 upwards and downwards in the directions 23. A retaining spring 24 tends to move the conveying rotor 7 downwards towards the feeding channel bottom 10.

A feeding channel 11 is formed between the feeding channel bottom 10 and the conveying rotor 7. In this implementation crop material in the feeding channel 11 can lift the conveying rotor 7 against the retaining force of the spring 24. The hydraulic actuator 12 and the retaining device 15 together tend to move the feeding channel bottom 10 towards the conveyor 17 such that the cross-section of the feeding channel 11 is decreased.

At the front edge of the feeding channel bottom 10 a nose portion 17 is mounted. This nose portion 17 is positioned between the lower stop 18 and the upper stop 19.

Fig. 3 shows the following parts:
- the feeding channel bottom 10 with the nose portion 17,
- a traversal axle 49 which is positioned perpendicular to the travelling direction TD and which supports the feeding channel bottom 10,
- the rotating axle 35 of the conveying rotor 7,
- several parallel knives of the cutting assembly 16,
- a left sidewall 48.1 and a right sidewall 48.r of the front housing 25,
- a sequence with several rigid conveying star tines 22.1, 22.2, ...,
- a sequence with several stripping elements 29.1, 29.2, ... engaging into gaps between two adjacent conveying stars of the conveying rotor 7,
- the left lateral piston-cylinder device 12.1 and a corresponding right lateral piston-cylinder device 12.r of the hydraulic actuator 12 which tends to lift for the feeding channel bottom 10,
- a left retaining spring 15.1 and a right retaining spring 15.r of the passive retaining device 15 for the feeding channel bottom 10,
- two connecting points 64.1, 64.r for the piston-cylinder devices 12.1, 12.r,
- two connecting points 63.1, 63.r for the retaining springs 15.1, 15.r,
- a supporting axle 49 which supports the nose portion 17 from below,
- two lateral pegs (pins) 14.1, 14.r mounted at the supporting axle 49 and connected with the springs 15.1, 15.r,
- the starter roller 8.1, and
- the sensor 20.

The knives 16 and the stripping elements 29.1, 29.2 engage from two opposing sides into gaps between adjacent conveying stars of the conveying rotor 7.

The feeding channel bottom 10 is supported by the traversal axle 49 and can therefore pivot around a horizontal pivoting axis. This pivoting axis is perpendicular to the travelling direction TD and runs through the pegs 14.1, 14.r, cf. Fig. 3. This pivoting axis is arranged near the front edge of the feeding channel bottom 10. The rear edge of the feeding channel bottom 10 is connected with the hydraulic actuator 12. This actuator 12 comprises two lateral hydraulic piston-cylinder devices 12.1, 12.r and can lift the feeding channel bottom 10 upwards.

In their lower ends the piston-cylinder devices 12.1, 12.r of the hydraulic actuator 12 are pivotally connected with a rear area of the channel bottom 10. In their upper ends the piston-cylinder devices 12.1, 12.r are connected with the front housing 25 in two connecting points 64.1, 64.r. The lower ends of the retaining springs 15.1, 15.r are connected with the pegs 14.1, 14.r of the axle 49 mounted below the front edge of the feeding channel bottom 10. The upper ends of the springs 15.1, 15.r are connected with the front housing 25 in two connecting points 63.1, 63.r. The springs 15.1, 15.r tend to pull the feeding channel bottom 10 upwards.

The actuator 12 can be implemented as a single-acting or double-acting actuator. In both implementations the actuator 12 can actively lift the feeding channel bottom 10 around the pivoting axis 49 through the pegs 14.1, 14.r. Thereby the hydraulic actuator 12 tends to move the bottom 10 towards the conveying rotor 7. This movement decreases the cross-section area of the feeding channel 11. Crop material in the feeding channel 11 is compressed. The hydraulic actuator 12 operates against the expanding force of the crop material in the feeding channel 11. In addition the retaining springs 15.1, 15.r tend to lift the feeding channel bottom 10 against the expanding force of the crop material and against the force of gravity upwards. If the hydraulic actuator 12 is implemented as a double-acting actuator, it can in addition actively lower downwards the feeding channel bottom 10, i.e. can move it away from the conveying rotor 7.

The lower stop 18 and the upper stop 19 limit the pivotal movement of the feeding channel bottom 10. The sensor 20 detects the event that the feeding channel bottom 10 touches the lower stop 18. The lower stop limits the possible increase of the cross-section area of the feeding channel 11.

In one implementation the cutting assembly 16 can be pivoted with respect to the feeding channel bottom 10 upwards and downwards. A cutting assembly actuator (not shown) tends to move the cutting assembly 16 towards the conveying rotor 7. Preferably this cutting assembly actuator operates as a double-acting actuator and can actively move the cutting assembly 16 with respect to the feeding channel bottom 10 in both directions. Therefore the cutting assembly 16 can be pivoted from a cutting position away from the conveyor 7 into a remote position. The cutting assembly 16 being in the cutting position engages with the maximal extend into the feeding channel 11. The cutting assembly 16 being in the remote position engages with less degree into the feeding channel 11.

The cross-section area of the feeding channel 11 can be changed by the following measures:
- The actuator 12 moves the feeding channel bottom 10 together with the knives 16 downwards (only in the case of a double-acting actuator) or upwards (also in the case of a single-acting actuator) in one direction indicated by the double arrow 23 in Fig. 2.
- The cutting assembly actuator (not shown) moves the cutting assembly 16 with respect to the feeding channel bottom 10 in the direction 23 away from the conveyor 7.
- In one implementation the conveying rotor 7 is moved in one direction away from the feeding channel bottom 10.

The baler 1 operates as follows:
- The pick-up unit 62 picks up loose crop material from the ground.
- The pick-up drum 5 operates as an overhead conveyor and moves the picked-up crop material through the pick-up channel 44. This pick-up channel 44 is positioned between the pick-up unit 62 and the downholder unit 60. The force of gravity pivots the downholder unit 60 towards the pick-up unit 62.
- The picked-up and moved crop material is conveyed through the feeding channel 11 towards the crop material inlet 4. The conveying rotor 7 with the rigid conveying stars operates in an undershot manner and conveys the crop material from below through the feeding channel 11. The conveying stars 22.1, 22.2, ... engage into gaps between adjacent knives of the cutting assembly 16. Thereby the crop material is cut.
- The hydraulic actuator 12 applies a force onto the feeding channel bottom 10. This force tends to lift the feeding channel bottom 10 towards the conveying rotor 7, thereby compresses the crop material in the feeding channel 11.
- The cutting assembly actuator applies a force onto the cutting assembly 16. This force tends to pivot the cutting assembly 16 with respect to the feeding channel bottom 10 towards the conveying rotor 7.
- Both actuators thereby tend to decrease the cross-section area of the feeding channel bottom 11. Crop material in the feeding channel 11 is compressed. The actuators operate against the expanding force of the compressed crop material.
- The cut crop material is injected through the crop material inlet 4 into the bale forming chamber. This drum-shaped bale forming chamber is surrounded by the pressing belts 13 and the two starter rollers 8.1, 8.2 forming the borders of the crop material inlet 4.
- The baler 1 forms an increasing bale in this bale forming chamber. Fig. 1 shows a small bale B.1 and a bale B with the required diameter.
- After the bale B has reached the required diameter, a web of wrapping material is pulled from the supply reel 28 and is inserted through a wrapping material inlet into the bale forming chamber. This wrapping material inlet is positioned above the web feeding roller 54. The web feeding roller 54 is driven and shifts the web of wrapping material towards the bale forming chamber.
- After the required number of layers is placed around the circumferential surface of the bale B in the bale forming chamber, the web of wrapping material is severed.
- A tailgate actuator (not shown) pivots the tailgate 27 against the force of gravity upwards away from the stationary front housing 25.
- The wrapped bale B is ejected out of the bale forming chamber.

In the embodiment the pivoting angle sensors 58, 53 measure the current pivoting angle of the pick-up unit 62 and the downholder unit 60, resp. The distance sensors 57, 56 measure the distance between the downholder unit 60 and the ground and the distance between the downholder unit 60 and the pick-up unit 62, resp. The signals from these four sensors 53, 56, 57, 58 are transmitted to the baler control unit 51. The baler control unit 51 processes the sensor signals and calculates the temporal changes of the pivoting angles and the distances.

In one embodiment the baler control unit 51 is connected with an output device for a human operator. The baler control unit 51 generates an alert if at least one of the following conditions is fulfilled:
- The measured pivoting angle of the downholder unit 60 or the distance downholder unit 60 - ground is above a given first, larger pivoting angle threshold.
- The measured pivoting angle or distance of the downholder unit 60 is above a given second, smaller pivoting angle threshold and the pivoting angle or distance increase is above a given pivoting angle increase threshold.
- The measured difference between the pivoting angles of the downholder unit 60 and of the pick-up unit 62 is above a first, larger given difference threshold.
- This measured difference is above a second, smaller difference threshold and the difference increase is above a given pivoting angle increase threshold.
- The measured distance between the downholder unit 60 and the pick-up unit 62 is above a given first, larger distance threshold.
- This measured distance is above a given second, smaller distance threshold and the distance increase is above a given distance increase threshold.

A clump of crop material is thereby detected by detecting at least one of the following events: a large pivoting angle or distance or a quick increase.

The output device outputs the alert in a human-perceptible form, i.e. with an acoustic and/or a visual signal. The human operator can use an input device for inputting control inputs for several baler parts. As a reaction on noticing the alert, the human operator can trigger the actuator 12 by using the input device.

In the case of a single-acting actuator 12 the triggered actuator 12 reduces the force applied onto the feeding channel bottom 10. The compressed crop material moves the feeding channel bottom 10 downwards and thereby away from the conveying rotor 7. If implemented as a double-acting actuator 12, the actuator actively lowers the feeding channel bottom 10 downwards away from the conveying rotor 7. In addition the cutting assembly actuator reduces the force applied onto the cutting assembly 16 or actively moves the cutting assembly 16 away from the conveying rotor 7. In both implementations the cross-section area of the feeding channel 11 is quickly increased. This movement further increases the cross-section area. As a further measure the human operator can decelerate the baler 1 such that less crop material is picked up.

In a further embodiment the baler control unit 51 directly triggers the actuator 12 for reducing the applied force or for actively moving the feeding channel bottom 10 downwards in the case that one of the conditions mentioned above is fulfilled. This further embodiment saves time and implements a very quick reaction if one of the conditions mentioned above is fulfilled.

By triggering the feeding channel bottom actuator 12 and the cutting assembly actuator the cross-section area of the feeding channel 11 is increased as the feeding channel bottom 10 is moved away from the conveying rotor 7. In addition it is possible that the conveying rotor 7 is moved away from the feeding channel bottom 10 against the retaining force of the retaining springs 24.

In one implementation the baler control unit 51 evaluates a computer-implemented table which assesses to every position value (pivoting angle or distance) of the downholder unit 60 a required force which the hydraulic actuator 12 applies onto the feeding channel bottom 10. As long as the measured position value is below a given threshold, the actuator 12 applies a maximal force onto the feeding channel bottom 10. The table assigns to every position value above this threshold a reduced force value. In one implementation the force value decreases linearly from the maximum value to zero with the position value increasing from the threshold to the maximal possible distance between the downholder unit 60 and the pick-up unit 61. A further table can be used for controlling the force which the cutting assembly actuator applies onto the cutting assembly 16.

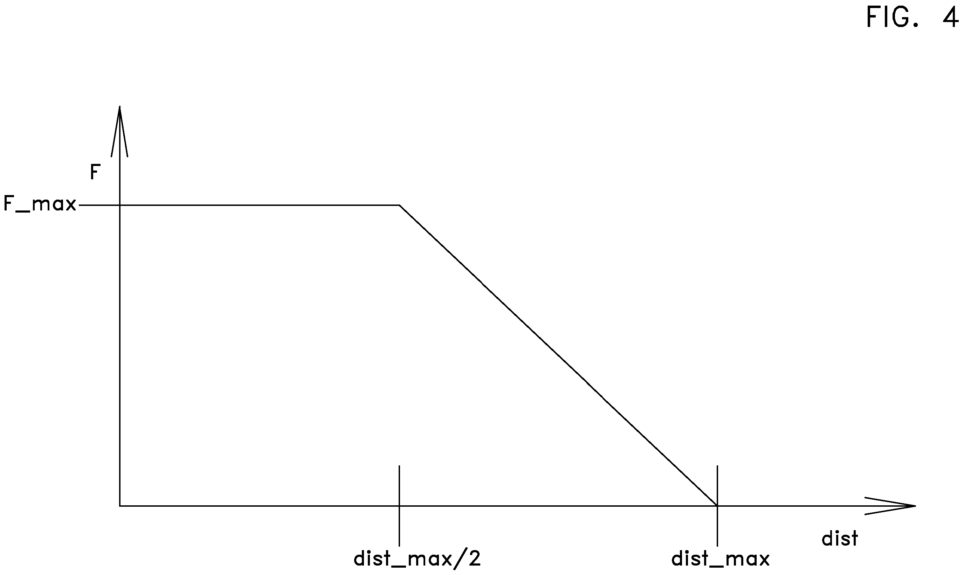

Fig. 4 shows an example for the table. The x-axis is for the distance between the downholder unit 60 and the picked-up unit 61. The y-axis is for the force which the actuator 12 applies onto the feeding channel bottom 10. On the x-axis the value dist_max is the maximal possible distance between the downholder unit 60 and the pick-up unit 61 and the value dist_max/2 serves as the threshold. On the y-axis F_max is the maximal possible force which the hydraulic actuator 12 can apply onto the feeding channel bottom 10.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1 | round baler |
| 2.1, 2.2, 2.3 | spring-mounted pick-up tines |
| 3.1, 3.2, 3.3 | moveable deflecting rollers, mounted at the tensioning device 32.1, 32.2 |
| 4 | crop material inlet, guiding into the bale forming chamber, delimited by the starter rollers 8.1, 8.2 |
| 5 | pick-up drum, carries the spring-mounted tines 2.1, 2.2, ... |
| 6.1, 6.2, ..., 6.5 | stationary deflecting rollers mounted at the tailgate 27 |
| 7 | conveying rotor with a sequence of rigid conveying stars each comprising several rigid conveying stars |
| 8.1, 8.2 | starter rollers, delimiting the crop material inlet 4 |
| 9.1, 9.2 | stationary deflecting rollers mounted at the front housing 25 |
| 10 | pivotal bottom of the feeding channel 11 |
| 11 | feeding channel with the bottom 10, serves as one moveable part |
| 12 | hydraulic actuator for lifting the feeding channel bottom 10, comprises the piston-cylinder devices 12.1, 12.r |
| 12.1 | left piston-cylinder device of the hydraulic actuator 12 |
| 12.r | right piston-cylinder device of the hydraulic actuator 12 |
| 13 | pressing belt(s) |
| 14.1, 14.r | pegs (pins) of the supporting axle 49 |
| 15.1 | left retaining spring for the feeding channel bottom 10 |
| 15.r | right retaining spring for the feeding channel bottom 10 |
| 16 | cutting assembly, engages from below into the feeding channel 11, serves as one moveable part |
| 17 | nose portion, mounted at the front edge of the feeding channel bottom 10 |
| 18 | lower stop for the pivotal feeding channel bottom 10 |
| 19 | upper stop for the pivotal feeding channel bottom 10 |
| 20 | sensor at the lower stop 18 |
| 21 | rotating direction of the conveying rotor 7 |
| 22.1, 22.2 | rigid tines of the conveying rotor 7 |
| 23 | directions in which the pivotal channel bottom 10 can move |
| 24 | retaining springs for the conveying rotor 7 |
| 25 | stationary front housing |
| 26 | traversal bearing for the pivotal connection between the tensioning arrangement 32.1, 32.2 and the stationary front housing 25 |
| 27 | pivotal tailgate, mounted at the tensioning arrangement 32.1, 32.2 |
| 28 | supply reel with wrapping material being in the working position |
| 29.1, 29.2, ... | stripping elements for the conveying stars of the conveying rotor 7 |
| 31 | stripping elements of the pick-up unit 62 |
| 32.1 | inner tensioning device, keeps the moveable deflecting rollers 3.1, 3.2, 3.3 |
| 32.2 | outer tensioning device, holds the tailgate 27 |
| 34 | frame of the pick-up unit 62 |
| 35 | rotating axle for the conveying rotor 7 |
| 36 | retaining spring, connected with the outer tensioning device 32.2 |
| 44 | pick-up channel between the downholder unit 60 and the pick-up unit 62 |
| 48.1 | left sidewall of the front housing 25 |
| 48.r | right sidewall of the front housing 25 |
| 49 | supporting axle for supporting the nose portion 17 of the feeding channel bottom 10 |
| 51 | baler control unit |
| 53 | pivoting angle sensor for measuring the pivoting angle of the holding member 55 |
| 54 | web feeding roller |
| 55 | holding member for the downholder roller 61 |
| 56 | distance sensor for measuring the distance between the downholder roller 61 and the ground |
| 57 | distance sensor for measuring the distance between the downholder unit 60 and the pick-up unit 62 |
| 58 | pivoting angle sensor for measuring the pivoting angle of the pick-up unit 62 |
| 59 | hydraulic retaining device for the tensioning assembly 32.1, 32.2 |
| 60 | downholder unit with the holding member 55 and the downholder roller 61 |
| 61 | downholder roller, mounted at the holding member 55 |
| 62 | pick-up unit with the pick-up tines 2.1, 2.2, 2.3 |
| 63.l, 63.r | mounting points for the retaining springs 15.1, 15.r |
| 64.l, 64.r 64.l, 64.r | mounting points for the piston-cylinder devices of the actuator 12 |
| B.1 | round bale with an intermediate size |
| B | round bale with a final size |
| dist_max | maximal possible distance between the downholder unit 60 and the pick-up unit 61 |
| F_max | maximal possible force which the actuator 12 applies onto the feeding channel bottom 10 |
| TD | travelling direction of the baler 1 |

## Claims

1. Crop feeding apparatus for an agricultural harvester (1),
wherein the crop feeding apparatus comprises
- a pick-up unit (62),
- a moveably mounted downholder unit (60) which is positioned vertically or angularly above the pick-up unit (62),
- a crop guiding member (10, 16) being positioned downstream from the pick-up unit (62), and
- a conveyor (7),
wherein a pick-up channel (44) is formed between
- the pick-up unit (62) and
- the downholder unit (60), and
wherein a feeding channel (11) is formed between
- the conveyor (7) and
- the crop guiding member (10, 16),
wherein the pick-up unit (62) is arranged to pick up loose crop material from the ground,
wherein the crop feeding apparatus is arranged to move the picked-up loose crop material through the pick-up channel (44) towards the feeding channel (11), and
wherein the conveyor (7) is arranged to convey the picked-up and moved loose crop material through the feeding channel (11) in a direction away from the pick-up channel (44),
**characterized in that**
the crop feeding apparatus further comprises
- a feeding channel actuator (12.l, 12.l) and
- at least one position sensor (53, 56, 57, 58),
wherein at least one part (10, 16) of the crop guiding member (10, 16) is moveably mounted with respect to the conveyor (7),
wherein the position sensor (53, 56, 57, 58) is arranged to measure a value
- indicative of the relative position of the downholder unit (60) with respect to the pick-up unit (62) or
- indicative of the change of this relative position, and
wherein the feeding channel actuator (12.1, 12.r) tends to move the or at least one moveable part (10, 16) towards the conveyor (7) by applying a force onto this moveable part (10, 16),
thereby tending to decrease the cross-section area of the feeding channel (11) and to compress crop material in the feeding channel (11), and
wherein the feeding channel actuator (12.1, 12.r) is arranged to decrease the force applied onto this moveable part (10, 16), thereby enabling an enlargement of the cross-section area,
if at least one value measured by the or one position sensor (53, 56, 57, 58) is above a given position threshold or position change threshold.

2. Crop feeding apparatus according to claim 1,
**characterized in that**
the or at least one position sensor (56) is arranged to measure a value
- indicative of the distance between the downholder unit (60) and the pick-up unit (62)
- or indicative of the distance change and
wherein the feeding channel actuator (12.1, 12.r) is arranged to decrease the force applied onto the or at least one moveable part (10, 16)
if at least one measured distance value or measured distance change value is above the given threshold.

3. Crop feeding apparatus according to one of the preceding claims,
**characterized in that**
the downholder unit (60) is pivotally mounted,
wherein the or at least one position sensor (53) is arranged to measure a value
- indicative of the pivoting angle or
- indicative of the pivoting angle change
of the downholder unit (60), and
wherein the feeding channel actuator (12.1, 12.r) is arranged to decrease the force applied onto the or at least one moveable part (10, 16)
if at least one measured pivoting angle value or pivoting angle value change of the downholder unit (60) is above the given threshold.

4. Crop feeding apparatus according to claim 3,
**characterized in that**
the pick-up unit (62) is pivotally mounted,
wherein the or at least one position sensor (57) is arranged to measure a value
- indicative of the pivoting angle or
- indicative of the pivoting angle change
of the pick-up unit (62), and
wherein the feeding channel actuator (12.1, 12.r) is arranged to decrease the force applied the or at least one moveable part (10, 16)
if a value depending on
- the measured downholder unit pivoting angle or pivoting angle change and
- on at least one measured pivoting angle value or pivoting angle value change of the pick-up unit (62)
is above the given threshold.

5. Crop feeding apparatus according to one of the preceding claims,
**characterized in that**
the or at least one position sensor (56) is arranged to measure
- a value indicative of the distance between the downholder unit (60) and the ground or
- a value indicative of the distance between the down holder unit (60) and the pick-up unit (62) or
- a value indicative of the distance change, and
wherein the feeding channel actuator (12.l, 12.r) is arranged to decrease the force applied the or at least one moveable part (10, 16)
if at least one measured distance value or distance value change of the downholder unit (60) is above the given threshold.

6. Crop feeding apparatus according to one of the preceding claims,
**characterized in that**
the crop guiding member (10, 16) comprises a cutting assembly (16),
wherein the cutting assembly (16)
- is moveable with respect to the conveyor (7),
- serves as the or one moveable part, and
- is arranged to cut loose crop material which is conveyed through the feeding channel (11),
wherein the feeding channel actuator (12.l, 12.r) tends to move the cutting assembly (16) towards the conveyor (7) by applying the force onto the cutting assembly (16) and
wherein the feeding channel actuator (12.1, 12.r) is arranged to decrease the force applied onto the cutting assembly (16)
if at least one measured position value or measured position change value is above the given threshold,

7. Crop feeding apparatus according to claim 6,
**characterized in that**
the crop guiding member (10, 16) comprises a guiding surface (10) delimiting the feeding channel (11)
wherein the cutting assembly (16) being in a cutting position penetrates through the guiding surface (10) into the feeding channel (11) and
wherein the feeding channel actuator (12.1, 12.r) tends to move the cutting arrangement (16) with respect to the guiding surface (10) towards the conveyor (7) by applying the force onto the cutting assembly (16).

8. Crop feeding apparatus according to one of the preceding claims,
**characterized in that**
the crop guiding member (10, 16) comprises a moveable guiding surface (10) serving as the or one moveable part,
wherein the feeding channel (11) is formed between the conveyor (7) and the guiding surface (10),
wherein the feeding channel actuator (12.1, 12.r) tends to move the guiding surface (10) towards the conveyor (7) by the applying the force onto the guiding surface (10) and
wherein the feeding channel actuator (12.1, 12.r) is arranged to decrease the force applied onto the guiding surface (10)
if the measured position value or the measured position change value is above the given threshold.

9. Crop feeding apparatus according to claim 8,
**characterized in that**
the crop guiding member (10, 16) further comprises a crop processing part (16) being mechanically connected with the guiding surface (10),
wherein the feeding channel actuator (12.1, 12.r) tends to move the guiding surface (10) together with the connected crop processing part (16) towards the conveyor (7) by the applying the force onto the guiding surface (10).

10. Crop feeding apparatus according to one of the preceding claims,
**characterized in that**
the feeding channel actuator (12.1, 12.r) is arranged to actively move the or at least one moveable part (10, 16) away from the conveyor (7)
if at least one value measured by the position sensor (53, 56, 57, 58) is above the threshold.

11. Crop feeding apparatus according to one of the preceding claims,
**characterized in that**
the crop feeding apparatus comprises a part retaining unit (15.1, 15.r),
wherein the part retaining unit (15.1, 15.r) tends to move the or at least one moveable part (10) towards the conveyor (7) together with the feeding channel actuator (12.1, 12.r), thereby tending to decrease the cross-section area.

12. Crop feeding apparatus according to claim 11,
**characterized in that**
the feeding channel actuator (12.1, 12.r) is arranged to move this moveable part (10) away from the conveyor (7)
against the retaining force of the part retaining unit (15.1, 15.r) if the position value or position change value is above the given threshold.

13. Crop feeding apparatus according to one of the preceding claims,
**characterized in that**
the downholder unit (60) is mounted for being moved upwards against the force of gravity by the loose crop material moved through the pick-up channel (44).

14. Crop feeding apparatus according to one of the preceding claims,
**characterized in that**
the crop feeding apparatus is at least temporarily in data connection with a control unit (51),
wherein the control unit (51) is arranged
- to automatically process signals from the or from at least one position sensor (53, 56, 57, 58) and
- to automatically generate control inputs for the feeding channel actuator (12.1, 12.r)
depending on at least one measured position value or measured position change value.

15. Crop feeding apparatus according to one of the preceding claims,
**characterized in that**
the or at least one position sensor (53, 56, 57, 58) is at least temporarily in data connection with an output device and
the feeding channel actuator (12.1, 12.r) is at least temporarily in data connection with an input device,
wherein the output device is arranged to output human-perceptible messages depending on at least one measured position value or measured position change value and
wherein the input device is arranged to automatically
- process inputs and
- generate control inputs for the feeding channel actuator (12.1, 12.r).

16. Agricultural harvester (1) comprising
- a crop feeding device according to one of the proceeding claims and
- a chamber arranged to contain crop material,
wherein the crop feeding device is arranged to feed picked-up crop material through the feeding channel (11) towards and into the chamber.

17. Method for feeding crop material on board of an agricultural harvester (1), by using a crop feeding apparatus comprising:
- a pick-up unit (62),
- a moveably mounted downholder unit (60) which is positioned vertically or angularly above the pick-up unit (62),
- a crop guiding member (10, 16) being positioned downstream from the pick-up unit (62), and
- a conveyor (7),
wherein a pick-up channel (44) is formed between
- the pick-up unit (62) and
- the downholder unit (60), and
wherein a feeding channel (11) is formed between
- the conveyor (7) and
- the crop guiding member (4) and
wherein the method comprises the steps that
- the pick-up unit (62) picks up loose crop material from the ground,
- the crop feeding apparatus moves the picked-up loose crop material through the pick-up channel (44) towards the feeding channel (11), and
- the conveyor (7) conveys the picked-up and moved loose crop material through the feeding channel (11) in a direction away from the pick-up channel (44),
**characterized in that**
the crop feeding apparatus further comprises
- an feeding channel actuator (12.1, 12.r) and
- at least one position sensor (53, 56, 57, 58),
wherein at least one part (10, 16) of the crop guiding member (10, 16) is moveably mounted,
wherein the method comprises the further steps that
the or one position sensor (53, 56, 57, 58) measures a value
- indicative of the relative position of the downholder unit (60) with respect to the pick-up unit (62) or
- indicative of the change of this relative position and
the feeding channel actuator (12.1, 12.r) applies a force onto the or at least one moveable part (10, 16),
thereby tending to move the or at least one moveable part (10, 16) towards the conveyor (7) such that
- the cross-section area of the feeding channel (11) is decreased and
- crop material in the feeding channel (11) is compressed,
wherein the event that at least one measured position value or measured position change value is above a given position threshold or position change threshold triggers the step that
the feeding channel actuator (12.1, 12.r) decreases the force which it applies onto this moveable part (10, 16)
such that an enlargement of the cross-section area is enabled.

18. Crop feeding method according to claim 17,
**characterized in that**
the crop feeding apparatus is at least temporarily in data connection with a control unit (51),
wherein the method comprises the further steps that
the control unit (51) processes signals from the or at least one position sensor (53, 56, 57, 58) and
the control unit (51) triggers the feeding channel actuator (12.1, 12.r) for reducing the force applied onto the moveable part (10, 16)
- if the measured position value is above a given first threshold or
- if the measured position value is above a given second threshold being smaller than the first threshold and the measured position value increases and the increase is above a given increase threshold.

## Patentansprüche

1. Erntegutzuführvorrichtung für eine landwirtschaftliche Erntemaschine (1),
wobei die Erntegutzuführvorrichtung Folgendes aufweist:
- eine Aufnehmeinheit (62),
- eine beweglich montierte Niederhalteeinheit (60), die vertikal oder mit winkelig oberhalb der Aufnehmeinheit (62) angeordnet ist,
- ein Erntegutführungselement (10, 16), das stromabwärts von der Aufnehmeinheit (62) angeordnet ist, und
- eine Fördervorrichtung (7),
wobei ein Aufnehmkanal (44) zwischen
- der Aufnehmeinheit (62) und
- der Niederhalteeinheit (60)
gebildet ist und
wobei ein Zuführkanal (11) zwischen
- der Fördervorrichtung (7) und
- dem Erntegutführungselement (10, 16)
gebildet ist,
wobei die Aufnehmeinheit (62) dazu angeordnet ist, loses Erntegutmaterial vom Boden aufzunehmen,
wobei die Erntegutzuführvorrichtung dazu angeordnet ist, das aufgenommene lose Erntegutmaterial durch den Aufnehmkanal (44) in Richtung des Zuführkanals (11) zu bewegen, und
wobei die Fördervorrichtung (7) dazu angeordnet ist, das aufgenommene und bewegte lose Erntegutmaterial durch den Zuführkanal (11) in eine Richtung weg von dem Aufnehmkanal (44) zu bewegen,
**dadurch gekennzeichnet, dass**
die Erntegutzuführvorrichtung weiterhin
- einen Zuführkanalaktuator (12.1, 12.1) und
- mindestens einen Positionssensor (53, 56, 57, 58)
aufweist,
wobei mindestens ein Teil (10, 16) des Erntegutführungselements (10, 16) relativ zu der Fördervorrichtung (7) beweglich montiert ist,
wobei der Positionssensor (53, 56, 57, 58) dazu angeordnet ist, einen Wert zu messen,
- der die relative Position der Niederhalteeinheit (60) in Bezug auf die Aufnehmeinheit (62) anzeigt oder
- der die Änderung dieser Relativposition anzeigt, und
wobei der Zuführkanalaktuator (12.l, 12.r) dazu tendiert, den einen oder mindestens einen beweglichen Teil (10, 16) in Richtung der Fördervorrichtung (7) zu bewegen, indem eine Kraft auf diesen beweglichen Teil (10, 16) aufgebracht wird,
wodurch tendenziell die Querschnittsfläche des Zuführkanals (11) verringert und das Erntegutmaterial in dem Zuführkanal (11) komprimiert wird, und
wobei der Zuführkanalaktuator (12.1, 12.r) dazu angeordnet ist, die auf diesen beweglichen Teil (10, 16) ausgeübte Kraft zu verringern, wodurch eine Vergrößerung der Querschnittsfläche ermöglicht wird,
falls mindestens ein Wert, der durch den einen oder einen Positionssensor (53, 56, 57, 58) gemessen wird, oberhalb einer vorgegebenen Positionsschwelle oder Positionsänderungsschwelle liegt.

2. Erntegutzuführvorrichtung nach Anspruch 1,
**dadurch gekennzeichnet, dass**
der eine oder mindestens eine Positionssensor (56) dazu angeordnet ist, einen Wert zu messen,
- der den Abstand zwischen der Niederhalteeinheit (60) und der Aufnehmeinheit (62) anzeigt
- oder der die Distanzänderung anzeigt, und
wobei der Zuführkanalaktuator (12.1, 12.r) dazu angeordnet ist, die Kraft zu verringern, die auf den einen oder mindestens einen beweglichen Teil (10, 16) aufgebracht wird,
falls mindestens ein gemessener Abstandswert oder ein gemessener Abstandsänderungswert oberhalb der vorgegebenen Schwelle liegt.

3. Erntegutzuführvorrichtung nach einem der vorhergehenden Ansprüche,
**dadurch gekennzeichnet, dass**
die Niederhalteeinheit (60) verschwenkbar montiert ist,
wobei der eine oder mindestens eine Positionssensor (53) dazu angeordnet ist, einen Wert zu messen,
- der den Schwenkwinkel oder
- der die Schwenkwinkeländerung
der Niederhalteeinheit (60) anzeigt, und
wobei der Zuführkanalaktuator (12.1, 12.r) dazu angeordnet ist, die Kraft zu verringern, die auf den einen oder mindestens einen beweglichen Teil (10, 16) aufgebracht wird,
falls mindestens ein gemessener Schwenkwinkelwert oder mindestens eine gemessene Schwenkwinkelwertänderung der Niederhalteeinheit (60) oberhalb der gegebenen Schwelle liegt.

4. Erntegutzuführvorrichtung nach Anspruch 3,
**dadurch gekennzeichnet, dass**
die Aufnehmeinheit (62) verschwenkbar montiert ist,
wobei der eine oder mindestens eine Positionssensor (57) dazu angeordnet ist, einen Wert zu messen, der
- den Schwenkwinkel oder
- die Schwenkwinkeländerung
der Aufnehmeinheit (62) anzeigt und
wobei der Zuführkanalaktuator (12.1, 12.r) dazu angeordnet ist, die Kraft zu verringern, die auf den oder mindestens einen beweglichen Teil (10, 16) aufgebracht wird,
falls ein von
- dem oder der gemessenen Niederhalteeinheitsschwenkwinkel oder -schwenkwinkeländerung und
- mindestens einem gemessenen Schwenkwinkelwert oder einer gemessenen Schwenkwinkelwertänderung der Aufnehmeinheit (62)
abhängiger Wert oberhalb der vorgegebenen Schwelle liegt.

5. Erntegutzuführvorrichtung nach einem der vorhergehenden Ansprüche,
**dadurch gekennzeichnet, dass**
der eine oder mindestens eine Positionssensor (56) dazu angeordnet ist,
- einen Wert, der den Abstand zwischen der Niederhalteeinheit (60) und dem Boden anzeigt, oder
- einen Wert, der den Abstand zwischen der Niederhalteeinheit (60) und der Aufnehmeinheit (62) anzeigt, oder
- einen Wert, der die Abstandsänderung anzeigt,
zu messen, und
wobei der Zuführkanalaktuator (12.l. 12.r) dazu angeordnet ist, die Kraft zu verringern, die auf den einen oder mindestens einen beweglichen Teil (10, 16) ausgeübt wird,
falls mindestens ein gemessener Abstandswert oder eine gemessene Abstandswertänderung der Niederhalteeinheit (60) oberhalb der vorgegebenen Schwelle liegt.

6. Erntegutzuführvorrichtung nach einem der vorhergehenden Ansprüche,
**dadurch gekennzeichnet, dass**
das Erntegutführungselement (10, 16) eine Schneidanordnung (16) aufweist,
wobei die Schneidanordnung (16)
- relativ zu der Fördervorrichtung (7) beweglich ist,
- als der eine oder ein beweglicher Teil dient und
- dazu angeordnet ist, loses Erntegutmaterial zu zerschneiden, das durch den Zuführkanal (11) gefördert wird,
wobei der Zuführkanalaktuator (12.1, 12.r) dazu tendiert, die Schneidanordnung (16) durch Ausüben der Kraft auf die Schneidanordnung (16) in Richtung auf die Fördervorrichtung (7) zu bewegen, und
wobei der Zuführkanalaktuator (12.1, 12.r) dazu angeordnet ist, die auf die Schneidanordnung (16) ausgeübte Kraft zu verringern,
falls mindestens ein gemessener Positionswert oder gemessener Positionsänderungswert oberhalb der vorgegebenen Schwelle liegt.

7. Erntegutzuführvorrichtung nach Anspruch 6,
**dadurch gekennzeichnet, dass**
das Erntegutführungselement (10, 16) eine Führungsfläche (10) aufweist, die den Zuführkanal (11) beschränkt,
wobei die Schneidanordnung (16) in einer Schneidposition durch die Führungsfläche (10) hindurch in den Zuführkanal (11) eindringt und
wobei der Zuführkanalaktuator (12.1, 12.r) dazu tendiert, die Schneidanordnung (16) durch Ausüben der Kraft auf die Schneidanordnung (16) relativ zu der Führungsfläche (10) in Richtung der Fördervorrichtung (7) zu bewegen.

8. Erntegutzuführvorrichtung nach einem der vorhergehenden Ansprüche,
**dadurch gekennzeichnet, dass**
das Erntegutführungselement (10, 16) eine bewegliche Führungsfläche (10) aufweist, die als der eine oder ein beweglicher Teil dient,
wobei der Zuführkanal (11) zwischen der Fördervorrichtung (7) und der Führungsfläche (10) gebildet ist,
wobei der Zuführkanalaktuator (12.1, 12.r) dazu tendiert, die Führungsfläche (10) durch Ausüben der Kraft auf die Führungsfläche (10) in Richtung der Fördervorrichtung (7) zu bewegen, und
wobei der Zuführkanalaktuator (12.1, 12.r) angeordnet ist, um die auf die Führungsfläche (10) ausgeübte Kraft zu verringern,
falls der gemessene Positionswert oder der gemessene Positionsänderungswert oberhalb der vorgegebenen Schwelle liegt.

9. Erntegutzuführvorrichtung nach Anspruch 8,
**dadurch gekennzeichnet, dass**
das Erntegutführungselement (10, 16) weiterhin einen Erntegutverarbeitungsteil (16) aufweist, der mechanisch mit der Führungsfläche (10) verbunden ist,
wobei der Zuführkanalaktuator (12.1, 12.r) dazu tendiert, die Führungsfläche (10) durch Ausüben der Kraft auf die Führungsfläche (10) zusammen mit dem verbundenen Erntegutverarbeitungsteil (16) in Richtung der Fördervorrichtung (7) zu bewegen.

10. Erntegutzuführvorrichtung nach einem der vorhergehenden Ansprüche,
**dadurch gekennzeichnet, dass**
der Zuführkanalaktuator (12.1, 12.r) dazu angeordnet ist, den einen oder mindestens einen beweglichen Teil (10, 16) von der Fördervorrichtung (7) aktiv wegzubewegen,
falls mindestens ein durch den Positionssensor (53, 56, 57, 58) gemessener Wert oberhalb der Schwelle liegt.

11. Erntegutzuführvorrichtung nach einem der vorhergehenden Ansprüche,
**dadurch gekennzeichnet, dass**
die Erntegutzuführvorrichtung eine Teilzurückhalteeinheit (15.1, 15.r) aufweist,
wobei die Teilzurückhalteeinheit (15.1, 15.r) dazu tendiert, den einen oder mindestens einen beweglichen Teil (10) zusammen mit dem Zuführkanalaktuator (12.1, 12.r) in Richtung der Fördervorrichtung (7) zu bewegen, wodurch tendenziell die Querschnittsfläche verringert wird.

12. Erntegutzuführvorrichtung nach Anspruch 11,
**dadurch gekennzeichnet, dass**
der Zuführkanalaktuator (12.1, 12.r) dazu angeordnet ist, diesen beweglichen Teil (10) von der Fördervorrichtung (7) wegzubewegen,
gegen die zurückhaltende Kraft der Teilzurückhalteeinheit (15.1, 15.r),
falls der Positionswert oder Positionsänderungswert oberhalb der vorgegebenen Schwelle liegt.

13. Erntegutzuführvorrichtung nach einem der vorhergehenden Ansprüche,
**dadurch gekennzeichnet, dass**
die Niederhalteeinheit (60) so montiert ist, dass sie durch das durch den Aufnehmkanal (44) bewegte lose Erntegutmaterial entgegen der Schwerkraft aufwärts bewegt werden kann.

14. Erntegutzuführvorrichtung nach einem der vorhergehenden Ansprüche,
**dadurch gekennzeichnet, dass**
die Erntegutzuführvorrichtung mindestens zeitweise in Datenverbindung mit einer Steuer- oder Regeleinheit (51) steht,
wobei die Steuer- oder Regeleinheit (51) dazu angeordnet ist,
- automatisch Signale von dem einen oder mindestens einen Positionssensor (53, 56, 57, 58) zu verarbeiten und
- automatisch Steuer- oder Regeleingaben für den Zuführkanalaktuator (12.1, 12.r) zu erzeugen,
wobei dies von mindestens einem gemessenen Positionswert oder gemessenen Positionsänderungswert abhängig ist.

15. Erntegutzuführvorrichtung nach einem der vorhergehenden Ansprüche,
**dadurch gekennzeichnet, dass**
der eine oder mindestens eine Positionssensor (53, 56, 57, 58) mindestens zeitweise in Datenverbindung mit einer Ausgabeeinrichtung steht und
der Zuführkanalaktuator (12.1, 12.r) mindestens zeitweise in Datenverbindung mit einer Eingabeeinrichtung steht,
wobei die Ausgabeeinrichtung dazu angeordnet ist, von Menschen wahrnehmbare Mitteilungen auszugeben,
abhängig von mindestens einem gemessenen Positionswert oder gemessenen Positionsänderungswert,
wobei das Eingabegerät dazu angeordnet ist, automatisch
- Eingaben zu verarbeiten und
- Steuer- oder Regelvorgaben für den Zuführkanalaktuator (12.l, 12.r) zu generieren.

16. Landwirtschaftliche Erntevorrichtung (1), mit
- einer Erntegutzuführvorrichtung nach einem der vorhergehenden Ansprüche und
- einer Kammer, die dazu für die Aufnahme des Erntegutmaterials angeordnet ist,
wobei die Erntegutzuführvorrichtung dazu angeordnet ist, aufgenommenes Erntegutmaterial durch den Zuführkanal (11) in Richtung der und in die Kammer zu führen.

17. Verfahren zum Zuführen von Erntegutmaterial auf einer landwirtschaftlichen Erntevorrichtung (1) unter Verwendung einer Erntegutzuführvorrichtung mit
- einer Aufnehmeinheit (62),
- einer beweglich montierten Niederhalteeinheit (60), die vertikal oder winkelig oberhalb der Aufnehmeinheit (62) angeordnet ist,
- einem Erntegutführungselement (10, 16), das stromabwärts von der Aufnehmeinheit (62) angeordnet ist, und
- einer Fördervorrichtung (7),
wobei ein Aufnehmkanal (44) zwischen
- der Aufnehmeinheit (62) und
- der Niederhalteeinheit (60)
gebildet ist und
wobei ein Zuführkanal (11) zwischen
- der Fördervorrichtung (7) und
- dem Erntegutführungselement (4)
gebildet ist, und
wobei das Verfahren die Schritte aufweist, dass
- die Aufnehmeinheit (62) loses Erntegutmaterial vom Boden aufsammelt,
- die Erntegutzuführvorrichtung das aufgenommene lose Erntegutmaterial durch den Aufnehmkanal (44) in Richtung des Zuführkanals (11) bewegt und
- die Fördervorrichtung (7) das aufgenommene und bewegte lose Erntegutmaterial durch den Zuführkanal (11) in eine Richtung weg von dem Aufnehmkanal (44) fördert,
**dadurch gekennzeichnet, dass**
die Erntegutzuführvorrichtung weiterhin
- einen Zuführkanalaktuator (12.1, 12.r) und
- mindestens einen Positionssensor (53, 56, 57, 58)
aufweist,
wobei mindestens ein Teil (10, 16) des Erntegutführungselements (10, 16) beweglich montiert ist,
wobei das Verfahren die weiteren Schritte aufweist, dass
der eine oder ein Positionssensor (53, 56, 57, 58) einen Wert misst,
- der die Relativposition der Niederhalteeinheit (60) in Bezug auf die Aufnehmeinheit (62) anzeigt oder
- der die Änderung dieser Relativposition anzeigt, und
und der Zuführkanalaktuator (12.1, 12.r) eine Kraft auf den einen oder mindestens einen beweglichen Teil (10, 16) aufbringt,
wodurch er dazu tendiert, den einen oder mindestens einen beweglichen Teil (10, 16) in Richtung der Fördervorrichtung (7) zu bewegen, so dass
- die Querschnittsfläche des Zuführkanals (11) verringert wird und
- Erntegutmaterial in dem Zuführkanal (11) komprimiert wird,
wobei das Ereignis, dass mindestens ein gemessener Positionswert oder gemessener Positionsänderungswert oberhalb einer vorgegebenen Positionsschwelle oder Positionsänderungsschwelle liegt, den Schritt auslöst, dass
der Zuführkanalaktuator (12.1, 12.r) die auf diesen beweglichen Teil (10, 16) aufgebrachte Kraft verringert,
so dass eine Vergrößerung der Querschnittsfläche ermöglicht wird.

18. Erntegutzuführverfahren nach Anspruch 17,
**dadurch gekennzeichnet, dass**
die Erntegutzuführvorrichtung mindestens zeitweise in Datenverbindung mit einer Steuer- oder Regeleinheit (51) steht,
wobei das Verfahren die weiteren Schritte umfasst, dass
die Steuer- oder Regeleinheit (51) Signale von dem einen oder mindestens einen Positionssensor (53, 56, 57, 58) verarbeitet und
die Steuer- oder Regeleinheit (51) den Zuführkanalaktuator (12.1, 12.r) zur Verringerung der auf den beweglichen Teil (10, 16) aufgebrachten Kraft veranlasst,
- falls der gemessene Positionswert oberhalb einer vorgegebenen ersten Schwelle liegt oder
- falls der gemessene Positionswert oberhalb einer vorgegebenen zweiten Schwelle liegt, die kleiner als die erste Schwelle ist, und sich der gemessene Positionswert vergrößert und die Vergrößerung oberhalb einer vorgegebenen Vergrößerungsschwelle liegt.

## Revendications

1. Dispositif d'alimentation en cultures pour une moissonneuse agricole (1),
dans lequel le dispositif d'alimentation en cultures comprend :
- une unité de ramassage (62),
- une unité de retenue en position basse (60) montée de manière amovible qui est positionnée verticalement ou angulairement au-dessus de l'unité de ramassage (62),
- un élément de guidage de cultures (10, 16) qui est placé en aval de l'unité de ramassage (62), et
- un convoyeur (7),
dans lequel un canal de ramassage (44) est formé entre :
- l'unité de ramassage (62) et
- l'unité de retenue en position basse (60), et
dans lequel un canal d'alimentation (11) est formé entre :
- le convoyeur (7) et
- l'élément de guidage de cultures (10, 16),
dans lequel l'unité de ramassage (62) est agencée de manière à ramasser du matériau de récolte en vrac sur le sol,
dans lequel le dispositif d'alimentation en cultures est agencé de manière à déplacer le matériau de récolte en vrac ramassé à travers le canal de ramassage (44) vers le canal d'alimentation (11), et
dans lequel le convoyeur (7) est agencé de manière à transférer le matériau de récolte en vrac ramassé et déplacé à travers le canal d'alimentation (11) dans une direction opposée au canal de ramassage (44),
**caractérisé en ce que**
le dispositif d'alimentation en cultures comprend en outre :
- un actionneur de canal d'alimentation (12.1, 12.r) et
- au moins un capteur de position (53, 56, 57, 58),
dans lequel au moins une partie (10, 16) de l'élément de guidage de cultures (10, 16) est montée de manière à se déplacer par rapport au convoyeur (7),
dans lequel le capteur de position (53, 56, 57, 58) est agencé de manière à mesurer une valeur :
- indicative de la position relative de l'unité de retenue en position basse (60) par rapport à l'unité de ramassage (62) ou
- indicative du changement de cette position relative, et
dans lequel l'actionneur de canal d'alimentation (12.1, 12.r) tend à déplacer la ou au moins une partie mobile (10, 16) vers le convoyeur (7) en appliquant un effort sur cette partie mobile (10, 16),
tendant ainsi à réduire la section transversale du canal d'alimentation (11) et à compresser la matière à récolter dans le canal d'alimentation (11), et
dans lequel l'actionneur de canal d'alimentation (12.1, 12.r) est agencé de manière à réduire l'effort appliqué sur cette partie mobile (10, 16), permettant ainsi une augmentation de la section transversale,
si au moins une valeur mesurée par le ou un capteur de position (53, 56, 57, 58) est supérieure à un seuil de position ou seuil de changement de position donné.

2. Dispositif d'alimentation en cultures selon la revendication 1,
**caractérisé en ce que**
le ou au moins un capteur de position (56) est agencé de manière à mesurer une valeur :
- indicative de la distance entre l'unité de retenue en position basse (60) et l'unité de ramassage (62)
- ou indicative du changement de distance, et
dans lequel l'actionneur de canal d'alimentation (12.1, 12.r) est agencé de manière à réduire l'effort appliqué sur la ou au moins une partie mobile (10, 16)
si au moins une valeur de distance mesurée ou valeur de changement de distance mesurée est supérieure au seuil donné.

3. Dispositif d'alimentation en cultures selon l'une des revendications précédentes,
**caractérisé en ce que**
l'unité de retenue en position basse (60) est montée de manière à pouvoir pivoter,
dans lequel le ou au moins un capteur de position (53) est agencé de manière à mesurer une valeur :
- indicative de l'angle de pivotement ou
- indicative du changement d'angle de pivotement de l'unité de retenue en position basse (60), et
dans lequel l'actionneur de canal d'alimentation (12.1, 12.r) est agencé de manière à réduire l'effort appliqué sur la ou au moins une partie mobile (10, 16)
si au moins une valeur d'angle de pivotement ou valeur de changement d'angle de pivotement mesurée de l'unité de retenue en position basse (60) est supérieure au seuil donné.

4. Dispositif d'alimentation en cultures selon la revendication 3,
**caractérisé en ce que**
l'unité de ramassage (62) est montée de manière à pouvoir pivoter,
dans lequel le ou au moins un capteur de position (57) est agencé de manière à mesurer une valeur :
- indicative de l'angle de pivotement ou
- indicative du changement d'angle de pivotement de l'unité de ramassage (62), et
dans lequel l'actionneur de canal d'alimentation (12.1, 12.r) est agencé de manière à réduire l'effort appliqué sur la ou au moins une partie mobile (10, 16)
si une valeur dépendant de :
- l'angle de pivotement ou du changement d'angle de pivotement d'unité de retenue en position basse mesuré et
- d'au moins une valeur de pivotement d'angle ou valeur de changement d'angle de pivotement mesurée de l'unité de ramassage (62)
est supérieure au seuil donné.

5. Dispositif d'alimentation en cultures selon l'une des revendications précédentes,
**caractérisé en ce que**
le ou au moins un capteur de position (56) est agencé de manière à mesurer :
- une valeur indicative de la distance entre l'unité de retenue en position basse (60) et le sol ou
- une valeur indicative de la distance entre l'unité de retenue en position basse (60) et l'unité de ramassage (62) ou
- une valeur indicative du changement de distance, et
dans lequel l'actionneur de canal d'alimentation (12.1, 12.r) est agencé de manière à réduire l'effort appliqué sur la ou au moins une partie mobile (10, 16)
si au moins une valeur de distance ou valeur de changement de distance mesurée de l'unité de retenue en position basse (60) est supérieure au seuil donné.

6. Dispositif d'alimentation en cultures selon l'une des revendications précédentes,
**caractérisé en ce que**
l'élément de guidage de cultures (10, 16) comprend un ensemble de coupe (16)
dans lequel l'ensemble de coupe (16) :
- peut être déplacé par rapport au convoyeur (7),
- sert de ou d'une des parties mobiles, et
- est agencé afin de couper le matériau de récolte en vrac qui est transféré à travers le canal d'alimentation (11),
dans lequel l'actionneur de canal d'alimentation (12.1, 12.r) tend à déplacer l'ensemble de coupe (16) vers le convoyeur (7) en appliquant l'effort sur l'ensemble de coupe (16) et
dans lequel l'actionneur de canal d'alimentation (12.1, 12.r) est agencé de manière à réduire l'effort appliqué sur l'ensemble de coupe (16)
si au moins une valeur de position mesurée ou valeur de changement de position mesurée est supérieure au seuil donné.

7. Dispositif d'alimentation en cultures selon la revendication 6,
**caractérisé en ce que**
l'élément de guidage de cultures (10, 16) comprend une surface de guidage (10) délimitant le canal d'alimentation (11)
dans lequel l'ensemble de coupe (16) qui est en position de coupe pénètre à travers la surface de guidage (10) dans le canal d'alimentation (11) et
dans lequel l'actionneur de canal d'alimentation (12.1, 12.r) tend à déplacer l'agencement de coupe (16) par rapport à la surface de guidage (10) vers le convoyeur (7) en appliquant l'effort sur l'ensemble de coupe (16).

8. Dispositif d'alimentation en cultures selon l'une des revendications précédentes,
**caractérisé en ce que**
l'élément de guidage de cultures (10, 16) comprend une surface de guidage mobile (10) servant de ou d'une des parties mobiles,
dans lequel le canal d'alimentation (11) est formé entre le convoyeur (7) et la surface de guidage (10),
dans lequel l'actionneur de canal d'alimentation (12.1, 12.r) tend à déplacer la surface de guidage (10) vers le convoyeur (7) par l'application de l'effort sur la surface de guidage (10) et
dans lequel l'actionneur de canal d'alimentation (12.1, 12.r) est agencé de manière à réduire l'effort appliqué sur la surface de guidage (10)
si la valeur de position mesurée ou la valeur de changement de position mesurée est supérieure au seuil donné.

9. Dispositif d'alimentation en cultures selon la revendication 8,
**caractérisé en ce que**
l'élément de guidage de cultures (10, 16) comprend en outre une partie de traitement de culture (16) qui est reliée mécaniquement à la surface de guidage (10),
dans lequel l'actionneur de canal d'alimentation (12.1, 12.r) tend à déplacer la surface de guidage (10) avec la partie de traitement de culture (16) couplée au convoyeur (7) par application de l'effort sur la surface de guidage (10).

10. Dispositif d'alimentation en cultures selon l'une des revendications précédentes,
**caractérisé en ce que**
l'actionneur de canal d'alimentation (12.1, 12.r) est agencé de manière à éloigner activement la ou au moins une partie mobile (10, 16) du convoyeur (7)
si au moins une valeur mesurée par le capteur de position (53, 56, 57, 58) est supérieure au seuil.

11. Dispositif d'alimentation en cultures selon l'une des revendications précédentes,
**caractérisé en ce que**
le dispositif d'alimentation en cultures comprend une unité de retenue de partie (15.1, 15.r), dans lequel l'unité de retenue de partie (15.1, 15.r) tend à déplacer la ou au moins une partie mobile (10) vers le convoyeur (7) avec l'actionneur de canal d'alimentation (12.1, 12.r), tendant ainsi à réduire la section transversale.

12. Dispositif d'alimentation en cultures selon la revendication 11,
**caractérisé en ce que**
l'actionneur de canal d'alimentation (12.1, 12.r) est agencé de manière à éloigner cette partie mobile (10) du convoyeur (7)
contre l'effort de retenue de l'unité de retenue de partie (15.1, 15.r)
si la valeur de position ou valeur de changement de position est supérieure au seuil donné.

13. Dispositif d'alimentation en cultures selon l'une des revendications précédentes,
**caractérisé en ce que**
l'unité de retenue en position basse (60) est montée de manière à être déplacée vers le haut contre l'effet de la gravité par le matériau de récolte en vrac déplacé à travers le canal de ramassage (44).

14. Dispositif d'alimentation en cultures selon l'une des revendications précédentes,
**caractérisé en ce que**
le dispositif d'alimentation en cultures est au moins temporairement en liaison numérique avec une unité de commande (51),
dans lequel l'unité de commande (51) est agencée :
- afin de traiter automatiquement des signaux provenant du ou d'au moins un capteur de position (53, 56, 57, 58) et
- de produire automatiquement des entrées de commande pour l'actionneur de canal d'alimentation (12.1, 12.r)
en fonction d'au moins une valeur de position mesurée ou valeur de changement de position mesurée.

15. Dispositif d'alimentation en cultures selon l'une des revendications précédentes,
**caractérisé en ce que**
le ou au moins un capteur de position (53, 56, 57, 58) est au moins temporairement en liaison numérique avec un dispositif de sortie et
l'actionneur de canal d'alimentation (12.1, 12.r) est au moins temporairement en liaison numérique avec un dispositif d'entrée,
dans lequel le dispositif de sortie est agencé de manière à produire les messages perceptibles par l'homme
en fonction d'au moins une valeur de position mesurée ou valeur de changement de position mesurée et
dans lequel le dispositif d'entrée est agencé de manière à automatiquement :
- traiter des entrées et
- produire des entrées de commande pour l'actionneur de canal d'alimentation (12.1, 12.r).

16. Moissonneuse agricole (1) comprenant :
- un dispositif d'alimentation en cultures selon l'une des revendications précédentes et
- un compartiment agencé de manière à contenir de la matière à récolter,
dans lequel le dispositif d'alimentation en cultures est agencé de manière à délivrer la matière à récolter ramassée à travers le canal d'alimentation (11) vers et à l'intérieur du compartiment.

17. Procédé d'alimentation de matériau de culture à bord d'une moissonneuse agricole (1), en utilisant un dispositif d'alimentation en cultures comprenant :
- une unité de ramassage (62),
- une unité de retenue en position basse (60) montée de manière amovible qui est positionnée verticalement ou angulairement au-dessus de l'unité de ramassage (62),
- un élément de guidage de cultures (10, 16) positionné en aval de l'unité de ramassage (62), et
- un convoyeur (7),
dans lequel un canal de ramassage (44) est formé entre :
- l'unité de ramassage (62) et
- l'unité de retenue en position basse (60), et
dans lequel un canal d'alimentation (11) est formé entre :
- le convoyeur (7) et
- l'élément de guidage de culture (4) et
dans lequel le procédé comprend les étapes telles que :
- l'unité de ramassage (62) ramasse le matériau de récolte en vrac au sol,
- le dispositif d'alimentation en cultures déplace le matériau de récolte en vrac ramassé à travers le canal de ramassage (44) vers le canal d'alimentation (11), et
- le convoyeur (7) transfère le matériau de récolte en vrac ramassé et déplacé à travers le canal d'alimentation (11) à l'opposé du canal de ramassage (44),
**caractérisé en ce que**
le dispositif d'alimentation en cultures comprend en outre :
- un actionneur de canal d'alimentation (12.1, 12.r) et
- au moins un capteur de position (53, 56, 57, 58),
dans lequel au moins une partie (10, 16) de l'élément de guidage de cultures (10, 16) est montée de manière amovible,
dans lequel le procédé comprend les étapes supplémentaires telles que
le ou un capteur de position (53, 56, 57, 58) mesure une valeur :
- indicative de la position relative de l'unité de retenue en position basse (60) par rapport à l'unité de ramassage (62) ou
- indicative du changement de cette position relative et
l'actionneur de canal d'alimentation (12.1, 12.r) applique un effort sur la ou au moins une partie mobile (10, 16),
tendant ainsi à déplacer la ou au moins une partie mobile (10, 16) vers le convoyeur (7) de telle sorte que :
- la section transversale du canal d'alimentation (11) est réduite et
- la matière à récolter dans le canal d'alimentation (11) est compressée,
dans lequel l'événement, tel que lorsqu'au moins une valeur de position mesurée ou une valeur de changement de position mesurée est supérieure à un seuil de position ou seuil de changement de position donné, déclenche l'étape telle que :
l'actionneur de canal d'alimentation (12.1, 12.r) réduit l'effort qu'il applique sur cette partie mobile (10, 16)
de telle sorte qu'une augmentation de la section transversale est permise.

18. Procédé d'alimentation en cultures selon la revendication 17,
**caractérisé en ce que**
le dispositif d'alimentation en cultures est au moins temporairement en liaison numérique avec une unité de commande (51),
dans lequel le procédé comprend les étapes supplémentaires telles que
l'unité de commande (51) traite des signaux du ou d'au moins un capteur de position (53, 56, 57, 58) et
l'unité de commande (51) déclenche l'actionneur de canal d'alimentation (12.1, 12.r) afin de réduire l'effort appliqué sur la partie mobile (10, 16) :
- si la valeur de position mesurée est supérieure à un premier seuil donné ou
- si la valeur de position mesurée est supérieure à un deuxième seuil donné qui est inférieur au premier seuil et la valeur de position mesurée augmente et l'augmentation est supérieure à un seuil d'augmentation donné.
